# NEUE EUROPÄISCHE PATENTSCHRIFT

(11) **EP 1 492 643 B2**
(45) Veröffentlichungstag und Bekanntmachung des Hinweises auf die Entscheidung über den Einspruch: **27.05.2009**
(45) Hinweis auf die Patenterteilung: 13.07.2005
(21) Anmeldenummer: 03720428.6
(22) Anmeldetag: 07.04.2003
(51) Int. Cl.: B23K 35/00, C03C 27/00, C04B 37/00, B29C 65/00

(54) **VERFAHREN ZUM VERBINDEN VON TEILEN**
METHOD FOR CONNECTING PARTS
PROCEDE D'ASSEMBLAGE DE PIECES

(30) Priorität: 11.04.2002 DE 10215900; 30.04.2002 DE 10219235
(43) Veröffentlichungstag der Anmeldung: 05.01.2005
(73) Patentinhaber: Grillo-Werke AG, D-47169 Duisburg (DE)
(72) Erfinder: SPRIESTERSBACH, Jochen, 47058 Duisburg (DE); MELZER, Armin, 46535 Dinslaken (DE); PRENGER, Frank, 41564 Kaarst (DE); KUROWSKI, Sabine, 46562 Voerde (DE); WISNIEWSKI, Jürgen, 46487 Wesel (DE)
(74) Vertreter: Meyers, Hans-Wilhelm
(86) Internationale Anmeldenummer: PCT/EP2003/003575
(87) Internationale Veröffentlichungsnummer: WO 2003/084709

(56) Entgegenhaltungen:
- EP-A- 0 623 415
- EP-A- 0 700 239
- EP-A- 0 771 885
- WO-A-01/83842
- DD-A- 215 336
- DE-A- 2 705 568
- DE-A- 3 821 073
- DE-A1- 19 916 618
- US- - 4 341 816
- 'Brockhaus-Enzyklopädie', 1989, F.A.BROCKHAUS, MANNHEIM Artikel 'in 24 Bd.-19., völlig neubearb. Aufl. - Bd. 8 Fru-Gos.'

## Beschreibung

Gegenstand der vorliegenden Erfindung ist ein Verfahren zum Verbinden von Teilen aus nicht oder nur schwer mittels Zinnbasislot zu lötenden Werkstoffen, nämlich Holz, Glas oder Keramik miteinander.

Teile aus nicht oder nur schwer mittels Zinnbasislot, insbesondere bleifreiem Zinnbasislot (z.B. SnCu₃, SnZn30, SnAg) zu lötenden Werkstoffe würden bisher miteinander oder mit anderen Werkstoffen verbunden, in dem sie miteinander verklebt wurden. Diese Verklebungen sind aber nur bedingt temperaturstabil und vielfach auch nicht beständig gegen Lösungsmittel, Chemikalien, UV-Strahlen etc. Ein weiterer Nachteil der Klebstoffe ist, dass sie elektrisch nicht leitfähig sind und auch die Wärmeleitfähigkeit wesentlich geringer ist als bei metallischen Verbindungen eines Metalllotes. Wegen derrelativ niedrigen Löttemperatur, leichten Verarbeitbarkeit und guten mechanischen Eigenschaften daraus hergestellter Lotverbindungen ist Zinnbasislot ein sehr beliebtes und bevorzugtes Lötmittel. Nachteil des Zinnbasislots ist jedoch, dass es viele Materialien gibt, die sich nicht oder nur schwer mit Zinnbasislot verbinden. Hierzu gehören vor allem Holz, Glas oder Keramik.

Die DE-A- 27 05 568 beschreibt das Verlöten eines Glas-Keramik- oder Kunststoff-Substrats mittels einer, z.B. Zinn-, Lotschicht, wobei vor der Lotschicht auf dem Substrat zuerst ein Haftvermittler, z.B. aus Cr, Ti oder Cr-Ni, und dann eine Schicht aus lötfähigem Material, z.B. Cu, aufgestäubt wird.

Die vorliegende Erfindung hat sich somit die Aufgabe gestellt, ein Verfahren zur Verfügung zu stellen, bei dem auch Teile aus Holz, Glas oder Keramik mittels Zinnbasislot miteinander verbunden werden können.

Diese Aufgabe wird dadurch gelöst, dass zumindest auf die zu verbindenden Teilbereiche der nicht oder nur schwer zu lötenden Werkstoffe eine oder mehrere metallische Zwischenschichten aus Zink oder einer Zinklegierung mit bis zu 30 Gew. % Aluminium thermisch aufgespritzt werden.

So kann z.B. eine mehrschichtige Zwischenschicht so aufgebracht werden, dass auf dem Substrat zunächst eine Eisen-Basis-Legierung als erster Haftgrund aufgetragen wird und anschließend eine lötbare Zinkschicht aufgebracht wird.

Beide Schichten werden durch ein thermisches Spritzverfahren aufgetragen. Mindestens die äußere Schicht besteht aus reinem Zink oder einer Zinklegierung mit bis zu 30 Gew.-% Aluminium.

Bevorzugt liegt der Gehalt an Aluminium bei 5 bis 25 Gew.-%, noch mehr bevorzugt bei 10 bis 20 Gew.-%.

Vorzugsweise wird auf diese lötbare Haftschicht aus Zink oder der Zinklegierung anschließend eine Schicht aus Zinnbasisiot aufgebracht, was durch thermisches Spritzen oder auch Tauchen oder Galvanisieren erfolgen kann.

Erfindungsgemäß nicht beanspricht wird die Offenbarung, dass, wenn der Werkstoff, der aus Holz, Glas oder Keramik besteht mittels Zinnbasislot mit Teilen aus leicht zu lötenden Werkstoffen verbunden werden soll, und wenn diese ausreichend temperaturbeständig sind, die Möglichkeit besteht, das Teil aus leicht zu lötenden Werkstoffen auf Temperaturen oberhalb des Schmelzpunktes des Zinnlots zu erhitzen und dann mit der auf der Haftschicht aus Zink oder der Zinklegierung aufgebrachten Schicht aus Zinnbasislot zusammen zu bringen. Es entsteht dabei unmittelbar eine gewünschte dauerhafte Verbindung der Bauteile.

Beispiele für erfindungsgemäß miteinander zu verbindenden Werkstoffpaarungen sind Holz/Glas, Keramik/Keramik.

So lässt sich beispielsweise Holz zunächst mit einem Haftgrund, aus Zink oder Zink-Aluminium-legierung in einem thermischen Spritzverfahren beschichten. Anschließend wird ein Zinnbasislot, ebenfalls mit einem thermischen Spritzverfahren aufgebracht.

In einigen Fällen lässt sich die Verbindung zwischen der Haftschicht aus Zink oder der Zinklegierung und dem Grundwerkstoff verstärken, indem die Haftschicht und Lötschicht vor dem Lötprozess mit geringer Walzkraft verformt wird. Werkstücke aus Keramik können vor dem Aufspritzen von Zink oder der Zinklegierung mit einem Haftgrund aus Eisen bespritzt werden.

In den nachfolgenden Beispielen ist das Verfahren näher erläutert.

### Beispiel 1 (nicht erfindungsgemäß)

Ein Werkstück aus Holz, wird zunächst mit Zink thermisch bespritzt. Anschließend wird mit einem Zinnbasislot (z.B. SnZn20) bespritzt. Wird dieses Werkstück mit einem Zinkblech in Kontakt gebracht, welches etwas über die Löttemperatur des Basislots erhitzt ist, entsteht nach dem Abkühlen eine gute und haltbare Lötverbindung.

### Beispiel 2 (nicht erfindungsgemäß)

Ein Werkstück aus Keramik wird zunächst mit einem Haftgrund auf Eisenbasis bespritzt. Anschließend wird mit Zink oder einer Zink-Aluminium-Legierung mit 15% Aluminium bespritzt. Schließlich wird mit einem Zinnbasislot (SnZn30) bespritzt. Wird dieses Werkstück mit einem Zinkblech in Kontakt gebracht, welches etwas über die Löttemperatur des Basislots erhitzt ist, entsteht nach dem Abkühlen eine gute und haltbare Lötverbindung.

## Patentansprüche

1. Verfahren zum Verbinden von Teilen aus nicht oder nur schwer mittels Zinnbasislot zu lötenden Werkstoffen, nämlich Holz, Glas oder Keramik miteinander, **dadurch gekennzeichnet, dass** zumindest auf die zu verbindenden Teilbereiche der nicht oder nur schwer zu lötenden Werkstoffe eine oder mehrere metallische Haftschichten aus Zink oder einer Zinklegierung mit bis zu 30 Gew. % Aluminium thermisch aufgespritzt wird, woraufhin mit Zinnbasislot verlötet wird.

2. Verfahren gemäß Anspruch 1, **dadurch gekennzeichnet, dass** die Haftschicht eine Zinkiegierung ist mit 5 - 25 Gew. % Aluminium.

3. Verfahren gemäß Anspruch 1 oder 2, **dadurch gekennzeichnet, dass** auf die Haftschicht zusätzlich eine Schicht aus Zinnbasislot durch Spritzen, Tauchen oder Galvanisieren aufgebracht wird.

4. Verfahren gemäß Anspruch 3, **dadurch gekennzeichnet, dass** die Schicht aus Zinnbasislot nach dem Auftragen gewalzt wird.

## Claims

1. A method for joining parts of materials which are non-solderable or difficult to solder by tin base solder, namely wood, glass or ceramics, with one another **characterized in that** one or several metallic adhesion layers made from zinc or a zinc alloy having up to 30% by weight of aluminium are thermally sprayed at least on the subareas of the non-solderable or difficult-to-solder materials to be joined, whereupon a soldering with tin base solder is performed.

2. The method according to claim 1, **characterized in that** said adhesion layer is a zinc alloy having from 5 - 25% by weight of aluminium.

3. The method according to claim 1 or 2, **characterized in that** a layer of tin base solder is additionally applied on the adhesion layer by spraying, dipping or electroplating.

4. The method according to claim 3, **characterized in that** said layer of tin base solder is rolled after being applied.

## Revendications

1. Procédé de jonction d'éléments constitués de matériaux non brasables ou difficilement brasables au moyen de brasure à base d'étain, à savoir de bois, de verre ou de céramique, entre eux **caractérisé en ce qu'**on applique par pulvérisation thermique, au moins sur le parties des éléments à joindre des matériaux non brasables ou difficilement brasables, une ou plusiers couches d'adhérence métalliques des zinc ou d'un alliage de zinc contenant jusqu'à 30 % en poids d'aluminium, sur quoi on brase avec de la brasure à base d'étain.

2. Procédé selon la revendication 1, **caractérisé en ce** la couche d'adhérence est un alliage de zinc contenant de 5 à 25 % en poids d'aluminium.

3. Procédé selon la revendication 1 ou 2, **caractérisé en ce qu'**on applique en plus sur la couche d'adhérence une couche de brasure à base d'étain par pulvérisation, trempage ou galvanoplastie.

4. Procédé selon la revendication 3, **caractérisé en ce qu'**on lamine la couche de brasure à base d'étain après son application.
